# EUROPÄISCHE PATENTSCHRIFT

(11) **EP 3 613 560 B1**
(45) Veröffentlichungstag und Bekanntmachung des Hinweises auf die Patenterteilung: **22.07.2020**
(21) Anmeldenummer: 18190700.7
(22) Anmeldetag: 24.08.2018
(51) Int. Cl.: B29C 64/129, B29C 64/393, B29C 64/277, B33Y 10/00, B33Y 30/00, B33Y 50/02, H04N 1/401, H04N 9/31

(54) **VERFAHREN ZUM SCHICHTWEISEN AUFBAU EINES FORMKÖRPERS DURCH STEREOLITHOGRAPHISCHES AUSHÄRTEN VON PHOTOPOLYMERISIERBAREM MATERIAL**
METHOD FOR LAYERED CONSTRUCTION OF A SHAPED BODY BY STEREOLITHOGRAPHIC CURING OF PHOTOPOLYMERISABLE MATERIAL
PROCÉDÉ DE FABRICATION PAR DÉPÔT DE COUCHES D'UN CORPS MOULÉ PAR DURCISSEMENT STÉRÉOLITHOGRAPHIQUE DE LA MATIÈRE PHOTOPOLYMÉRISABLE

(43) Veröffentlichungstag der Anmeldung: 26.02.2020
(73) Patentinhaber: Ivoclar Vivadent AG, 9494 Schaan (LI)
(72) Erfinder: Ebert, Jörg, 9470 Buchs (CH); Geissbühler, Stefan, 4900 Langenthal (CH)
(74) Vertreter: Uexküll & Stolberg

(56) Entgegenhaltungen:
- EP-A1- 1 849 587
- WO-A2-2015/193355
- DE-A1-102015 103 389
- US-A1- 2015 002 750

## Beschreibung

Die vorliegende Erfindung betrifft ein Verfahren zum schichtweisen Aufbau eines Formkörpers durch stereolithographisches Aushärten von photopolymerisierbarem Material in aufeinanderfolgenden Schichten durch Belichten mittels einer Belichtungseinheit in einem für jede Schicht vorgegebenen Belichtungsgebiet mit vorgegebener Schichtkontur, wobei die Belichtungseinheit zur Belichtung einer Vielzahl von Bildelementen in einem vorgegebenen Belichtungsfeld ausgestaltet ist und eine Belichtung durch von einer Steuereinheit gesteuertes selektives Belichten von Bildelementen, die zusammen das Belichtungsgebiet mit der jeweils vorgegebenen Schichtkontur definieren, erfolgt und wobei die Belichtungseinheit durch die Steuereinheit dazu ansteuerbar ist, für jedes Bildelement Belichtungslicht mit einstellbarer Belichtungsintensität zwischen Null und einer maximalen Intensität zu erzeugen, das über eine Abbildungsoptik der Belichtungseinheit auf das zugehörige Bildelement abgebildet wird, wobei die Steuereinheit bei der Ansteuerung der Belichtungseinheit vorab bestimmte Homogenisierungsfaktoren verwendet, wobei jedem Bildelement ein vorab so bestimmter Homogenisierungsfaktor zugeordnet ist, dass, wenn bei der Erzeugung von Belichtungslicht für Bildelemente Belichtungsintensitäten verwenden werden, die für jedes Bildelement durch eine einheitliche Grundintensität multipliziert jeweils mit dem dem jeweiligen Bildelement zugeordneten Homogenisierungsfaktor bestimmt ist, die tatsächliche wirksame Intensität für jedes Bildelement ortsunabhängig über das Belichtungsfeld gleich ist.

Ein Verfahren zum Aufbau eines Formkörpers ist zum Beispiel aus WO 2010/045950 A1 bekannt, die insbesondere den Aufbau von Dentalrestaurationen aus keramischen Schlickern betrifft, die eine flüssige, photopolymerisierbare Komponente enthalten. Bei diesem bekannten Verfahren wird eine Bauplattform vertikal beweglich über einem Wannenboden gehalten, der lichtdurchlässig ist. Unterhalb des Wannenbodens befindet sich eine Belichtungseinheit. Die Bauplattform wird zunächst in den Schlicker soweit abgesenkt, bis zwischen Bauplattform und Wannenboden nur noch eine Schicht mit der gewünschten Schichtdicke verbleibt. Anschließend wird diese Schicht durch die Belichtungseinheit in einer gewünschten Form (ein oder mehrere separate Flächenbereiche mit vorgegebenen Außenkonturen) durch die Belichtungseinheit belichtet und dadurch ausgehärtet. Nach Anheben der Bauplattform wird Schlicker aus der Umgebung nachgeführt und die Bauplattform erneut abgesenkt, wobei die Absenkung so gesteuert wird, dass der Abstand zwischen der zuletzt ausgehärteten Schicht und dem Wannenboden eine Schicht mit der gewünschten Dicke definiert. Die letzten Schritte werden so oft wiederholt, bis durch die aufeinanderfolgende Aushärtung von Schichten mit jeweils vorgegebener Kontur ein Formkörper mit der gewünschten dreidimensionalen Form aufgebaut ist.

Die Belichtungseinheit ist zur Belichtung einer großen Anzahl von Bildelementen in einem vorgegebenen Belichtungsfeld ausgestaltet. Die Belichtungseinheit beinhaltet z.B. eine Lichtquelle und einen Flächenintensitätsmodulator (spatial light modulator), dessen wirksame Oberfläche von der Lichtquelle beleuchtet wird. Der Intensitätsmodulator umfasst eine Matrix von Belichtungselementen, wobei jedes Belichtungselement einem Bildelement in dem Belichtungsfeld der Belichtungseinheit zugeordnet ist. Der Flächenintensitätsmodulator kann z.B. eine sogenannte Mikrospiegel-Vorrichtung sein; darunter versteht man einen Chip, auf dem eine große Anzahl von matrixförmig angeordneten Mikrospiegelaktoren angeordnet ist. Jeder Mikrospiegelaktor ist individuell selektiv von einer Steuereinheit ansteuerbar um ihn selektiv zwischen einer Beleuchtungsstellung, in der der zugehörige Mikrospiegel Licht von der Lichtquelle auf das zugehörige Bildelement richtet, und einer Dunkelstellung hin und her kippbar ist, in der der Mikrospiegel das Licht der Lichtquelle in einen inaktiven Bereich ablenkt, so dass das zugehörige Bildelement in dem Belichtungsfeld kein Licht von dem zugeordneten Mikrospiegel erhält. Durch hin und her Kippen der Mikrospiegel mit einem für jedes Belichtungselement selektiv vorgegebenen Tastverhältnis kann so die für das zugeordnete Bildelement erzeugte Belichtungsintensität als mittlere Intensität nach Maßgabe des Tastverhältnisses eingestellt werden. Ein anderes Beispiel für einen Flächenintensitätsmodulator umfasst eine Flüssigkristallanzeige, die von einer Lichtquelle beleuchtet wird und die in eine matrixförmige Anordnung von einer großen Anzahl von individuellen Belichtungselementen unterteilt ist, die jeweils einem Bildelement in dem Belichtungsfeld der Belichtungseinheit zugeordnet sind.

Die matrixförmige Anordnung der Belichtungselemente der Belichtungseinheit wird über ein abbildendes Objektiv auf das Belichtungsfeld der Belichtungseinheit abgebildet, das das Arbeitsfeld der Belichtungseinheit darstellt. Das Belichtungsfeld ist in die große Anzahl von Bildelementen unterteilt, und innerhalb des Belichtungsfeldes kann ein Belichtungsgebiet durch Aktivieren der Belichtungselemente, die den in dem Belichtungsgebiet liegenden Bildelementen zugeordnet sind, selektiv definiert beleuchtet werden. Bei den meisten Belichtungsschritten beim Aufbau typischer Formkörper ist das aktuell benötigte Belichtungsgebiet deutlich kleiner als das gesamte Belichtungsfeld, das die Belichtungseinheit prinzipiell ausleuchten kann. In vielen Fällen werden eher zentrale Teilstücke des Belichtungsfeldes als Belichtungsgebiet belichtet.

Die Belichtungsintensität jedes Belichtungselements der Belichtungseinheit ist wie erläutert durch eine Steuereinheit individuell einstellbar, so dass die für jedes Bildelement tatsächlich erzeugte Belichtungsintensität durch entsprechende Ansteuerung des zugeordneten Belichtungselements genau einstellbar ist. Es ist aber zu berücksichtigen, dass sämtliche optische Elemente zwischen der Lichtquelle und dem Belichtungsfeld der Belichtungseinheit eine Intensitätsabschwächung bewirken, die nicht für alle Bildelemente in dem Belichtungsfeld der Belichtungseinheit gleich ist, sondern vom Ort innerhalb des Belichtungsfeldes abhängt. Bei üblichen abbildenden Optiken ist die Intensitätsabschwächung in einem zentralen Bereich des Belichtungsfeldes am niedrigsten, nimmt weiter außerhalb des Zentrums des Belichtungsfeldes zu und ist am äußeren Rand des Belichtungsfeldes maximal. Mit anderen Worten, auch wenn für alle Bildelemente die gleiche Belichtungsintensität durch die jeweils zugeordneten Belichtungselemente erzeugt wird, führen die beschriebenen Inhomogenitäten der abbildenden Optik dazu, dass die dadurch tatsächlich in den zugeordneten Bildelementen wirksam werdende Intensität ortsabhängig über das Belichtungsfeld variiert. In dieser Hinsicht ist es bekannt, die Belichtungseinheit vorab einer Kalibration zu unterziehen und eine Matrix von sogenannten Homogenisierungsfaktoren zu bestimmen, wobei jedem Belichtungselement bzw. jedem Bildelement im Bildfeld der Belichtungseinheit ein Homogenisierungsfaktor, d.h. ein Element in einer Matrix von Homogenisierungsfaktoren, zugeordnet ist. Die Homogenisierungsfaktoren sind so bestimmt, dass bei der Ansteuerung der Belichtungselemente mit einheitlicher Grundintensität multipliziert mit den Homogenisierungsfaktoren die tatsächlich wirksame Intensität an allen Bildelementen im Belichtungsfeld gleich groß ist.

Die Homogenisierungsfaktoren können vorab z.B. dadurch bestimmt werden, dass die für jedes Bildelement tatsächlich wirksame Intensität gemessen wird. Dann kann für jedes Bildelement das Verhältnis von der für das jeweilige Bildelement tatsächlich wirksam werdender Intensität zur maximalen Intensität eines Bildelements im Belichtungsfeld bestimmt und diesem jeweiligen Bildelement zugeordnet werden. Die Homogenisierungsfaktoren können dann als das Inverse der genannten Intensitätsverhältnisse bestimmt und den einzelnen Bildelementen zugeordnet werden. Das bedeutet, dass den Bildelementen mit der maximalen Bildintensität im Belichtungsfeld ein Homogenisierungsfaktor von 1 zugeordnet ist, während Bildelementen, die typischerweise eher an den Rändern des Belichtungsfeldes liegen und in denen die tatsächlich wirksam werdende Intensität durch Abschwächung in der abbildenden Optik geringer würde, einen Homogenisierungsfaktor von größer als 1 haben, so dass die stärkere Abschwächung im Verlaufe des Strahlengangs durch abbildende Optik zu dem jeweiligen Bildelement durch ein für das jeweilige Bildelement durch den Homogenisierungsfaktor erhöhte ursprünglich erzeugte Intensität des zugeordneten Belichtungselements ausgeglichen wird.

Ein Verfahren gemäß Oberbegriff von Patentanspruch 1 ist aus EP 1 849 587 A1 bekannt. Ein solches Verfahren zum stereolithographischen Aufbau von Körpern wie oben beschrieben und mit den Merkmalen des Oberbegriffs von Patentanspruch 1 ist auch aus WO 96/00422 A1 bekannt. Das Verfahren verwendet einen Flächenintensitätsmodulator, dort als programmierbare Maske bezeichnet, mit z.B. 640 x 480 Bildelementen, die über eine abbildende Optik auf ein Belichtungsgebiet abgebildet wird. In Tabelle 2A in dem genannten Dokument sind für ein vereinfachtes Beispiel eines Belichtungsfeldes von 11 x 11 Bildelementen die in den Bildelementen jeweils tatsächlich wirksam werdenden Intensitäten aufgeführt, wobei das zentrale Bildelement eine Intensität von 100 hat und die außerhalb des Zentrum bewirkten Intensitäten, insbesondere am Rand selbst deutlich kleiner sind. Die minimale Intensität in den Ecken der 11 x 11 Bildelemente beträgt 9. In Tabelle 2B sind die entsprechenden Homogenisierungsfaktoren (dort als Skalierungsfaktoren bezeichnet) aufgeführt, die im Zentrum 1,0 und in den Ecken 11,1 und für alle anderen Bildelemente dazwischenliegende Werte haben.

Ein Nachteil des beschriebenen stereolithographischen Verfahrens besteht darin, dass die Homogenisierung der Belichtung eines Belichtungsgebiets so durchgeführt wird, als ob das gesamte Belichtungsfeld der Belichtungseinheit belichtet würde, auch wenn das tatsächliche Belichtungsgebiet nur einen kleinen Teilabschnitt des Belichtungsfeldes darstellt. Das ist insbesondere für viele Bauschritte für Schichten nachteilig, deren Schichtgebiet sich eher auf einen zentralen Bereich innerhalb des Belichtungsfeldes beschränkt oder jedenfalls nicht die am äußersten Rand des Belichtungsfeldes liegenden Bildelemente umfasst. Die an der Belichtung solcher Belichtungsgebiete beteiligten Belichtungselemente benötigen keine oder jedenfalls keine sehr hohe Verstärkung, um die Homogenisierung in dem zentralen Belichtungsgebiet zu bewirken. Da die Belichtungseinheit aber so gesteuert wird, dass hypothetisch gleichzeitig auch noch ein am Rand liegender Bildpunkt belichtet werden könnte, der eine sehr hohe Verstärkung (hohen Homogenisierungsfaktor) benötigt, um auch dort hypothetisch die gleiche wirksam werdende Intensität erreichen zu können, kann die Kapazität der Belichtungselemente für die in einem zentralen Belichtungsgebiet liegenden Bildelemente nicht gut ausgenutzt werden. Das liegt daran, dass die einem zentralen Belichtungsgebiet zugeordneten Belichtungselemente nur mit relativ geringer Verstärkung und daher mit relativ geringer absoluter Intensität betrieben werden und daher meist deutlich unter der pro Belichtungselement maximal möglichen Intensität liegen. Bei solchen Belichtungsschritten, bei denen nur oder überwiegend Belichtungselemente verwendet werden, deren Homogenisierungsfaktor nicht deutlich größer als 1 ist, kann daher die Leistung der Belichtungseinheit für solche Belichtungsgebiete nicht effektiv abgerufen werden. Anders ausgedrückt, wird das Licht der Lichtquelle für solche Belichtungsgebiete nicht effizient genutzt, da immer das Potential bereitgehalten wird, im Prinzip auch noch ein Bildelement belichten zu können, das einen sehr großen Homogenisierungsfaktor hat (Randbildelement). Für Bildelemente in einem Belichtungsgebiet mit relativ niedrigen Homogenisierungsfaktoren bedeutet das, dass für diese das Licht der Lichtquelle in erheblichem Umfang nicht zur Belichtung verwendet wird, sondern in einen inaktiven Bereich abgelenkt werden muss, wenn z.B. eine Mikrospiegel-Vorrichtung zur Intensitätsmodulation verwendet wird.

Aus US 2015/0002750 A1 ist ein Projektionsapparat bekannt, dessen Steuereinheit dazu eingerichtet ist, vor der Belichtung eines Belichtungsgebiets einen Aufhellungsfaktor als Verhältnis der maximalen Intensität der Belichtungseinheit zu der in dem aktuellen Belichtungsgebiet maximalen Belichtungsintensität zu bestimmen und die Belichtungsintensitäten multipliziert mit dem Aufhellungsfaktor zur Belichtung des aktuellen Belichtungsgebiets zu verwenden.

Es ist daher Aufgabe der vorliegenden Erfindung, ein stereolithographisches Bauverfahren für Formkörper so zu verbessern, dass die Leistungsfähigkeit der Belichtungseinheit effektiver ausgenutzt werden kann.

Zur Lösung dieser Aufgabe dient das Verfahren mit den Merkmalen des Patentanspruchs 1. Eine vorteilhafte Ausführungsform ist in Anspruch 2 aufgeführt. Eine Vorrichtung zur Durchführung des erfindungsgemäßen Verfahrens ist in Anspruch 3 angegeben, und vorteilhafte Ausführungsformen der Vorrichtung sind in Ansprüchen 4 bis 9 aufgeführt.

Bei dem erfindungsgemäßen stereolithographischen Bauverfahren ist vorgesehen, dass vor der Belichtung eines Belichtungsgebiets ein Aufhellungsfaktor bestimmt wird, der definiert ist als Verhältnis zwischen der maximalen Intensität der Belichtungseinheit zu der in dem jeweiligen Belichtungsgebiet maximalen Intensität. Dann werden die Belichtungsintensitäten der Bildelemente in dem Belichtungsgebiet mit dem Aufhellungsfaktor multipliziert und nach dieser Skalierung zur Ansteuerung der Belichtungseinheit zur Belichtung des jeweiligen Belichtungsgebiets verwendet. Dadurch ist sichergestellt, dass bei der Belichtung jedes Belichtungsgebiets in dem jeweiligen Belichtungsgebiet wenigstens ein Belichtungselement mit der maximalen Intensität pro Belichtungselement der Belichtungseinheit betrieben wird. Das bedeutet insbesondere für Belichtungsgebiete, die zentral im Belichtungsfeld der Belichtungseinheit liegen, dass die Leistungsfähigkeit der Belichtungseinheit wesentlich effizienter ausgenutzt wird.

Weiter wird Erfindungsgemäß entweder (1) durch die durch den Aufhellungsfaktor erhöhte Intensität der Belichtung in dem Belichtungsgebiet die Belichtungsdauer, die bei einer Belichtung ohne Aufhellungsfaktor notwendig wäre, verkürzt, indem sie durch den Aufhellungsfaktor dividiert wird, so dass die über die Belichtungsdauer integrierte Intensität pro Belichtungselement gleich bleibt, wodurch der Bauvorgang beschleunigt wird, oder (2) wird die zur Aushärtung einer Schicht in einem Belichtungsgebiet ohne Aufhellungsfaktor notwendige Intensität einer Lichtquelle der Belichtungseinheit durch Division durch den Aufhellungsfaktor reduziert, um die Belichtung des Belichtungsgebiets mit reduzierter Intensität der Lichtquelle vorzunehmen.

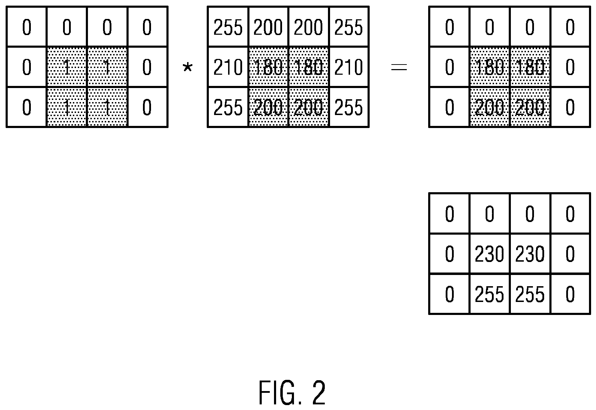

Ein vereinfachtes schematisches Beispiel für ein Belichtungsfeld mit 4 x 3 Bildelementen ist in Fig. 2 dargestellt. Wie in der linksstehenden Matrix gezeigt, soll hier das grau hinterlegte Quadrat von vier Bildelementen, die eine 1 enthalten, belichtet werden. Die Belichtungselemente der Belichtungseinheit haben eine mit 8 Bit steuerbar einstellbare Intensität zwischen 0 und maximaler Intensität 255 pro Belichtungselement. In der Mitte von Fig. 2 ist die Matrix von Homogenisierungsfaktoren dargestellt. Wie bei typischen abbildenden Optiken üblich ist die Abschwächung im zentralen Bereich weniger stark als an den Rändern, so dass an den Rändern höhere Homogenisierungsfaktoren vorkommen. Die Multiplikation der linken Matrix mit der einheitlichen Grundintensität 1 des zu belichtenden Quadrats mit den Homogenisierungsfaktoren ergibt die rechts dargestellte Matrix von Belichtungsintensitäten. Wie zu erkennen ist, beträgt die maximale Belichtungsintensität in einem Belichtungselement des Belichtungsgebiets 200; die pro Belichtungselement maximal einstellbare Intensität von 255 würde also nicht ausgenutzt. Es wird daher ein Aufhellungsfaktor bestimmt, der als Verhältnis aus der maximalen Belichtungsintensität 255 pro Bildelement zu der in dem jeweiligen Belichtungsgebiet maximal vorkommenden Belichtungsintensität 200 definiert ist: Aufhellungsfaktor = 255/200. Die tatsächlich zur Ansteuerung der Belichtungselemente für dieses Belichtungsgebiet verwendeten Belichtungsintensitäten werden mit diesem Aufhellungsfaktor multipliziert, so dass sich die in der Matrix rechts unten gezeigten Belichtungsintensitäten für dieses Belichtungsgebiet ergeben.

Bei einer Belichtungseinheit mit einer LED-Lichtquelle und einer Mikrospiegel-Vorrichtung als Flächenintensitätsmodulator kann durch das erfindungsgemäße Verfahren die Lebensdauer der LED-Lichtquelle verlängert werden. Dies beruht auf der Tatsache, dass bei der Homogenisierung der Intensität der Belichtungselemente (Einzelspiegel) nicht stets das gesamte Belichtungsfeld der Belichtungseinheit homogenisiert wird, sondern nur die Belichtungselemente berücksichtigt werden, die Bildelementen zugeordnet sind, die in dem tatsächlichen Belichtungsgebiet für die aktuell zu belichtende Schicht liegen. Bei einer Mikrospiegel-Vorrichtung funktioniert das Homogenisieren über die individuelle Einstellung der Tastverhältnisse (duty cycle) der Einzelspiegel. Das Bildelement mit der ohne Homogenisierung geringsten effektiv wirksamen Intensität (das dunkelste Bildelement) in dem Belichtungsgebiet erhält ein Tastverhältnis von 100% (immer ON während der Belichtungszeit). Die anderen Bildelemente (genauer gesagt die ihnen zugeordneten Belichtungselemente) erhalten ein Tastverhältnis entsprechend ihrem Helligkeitsverhältnis zum dunkelsten Belichtungselement (beispielsweise wird einem Belichtungselement mit 150% der Intensität des dunkelsten Belichtungselements ein Tastverhältnis von 66% zugeordnet um auf die gleiche mittlere Intensität zu kommen). Mit der Einstellung der Bestromung der LED-Lichtquelle kann nun noch zusätzlich dafür gesorgt werden, dass entweder stets mit gleichbleibender mittlerer Intensität gebaut wird, oder bei konstanter Bestromung der LED-Lichtquelle mit verkürzter Belichtungszeit kann mit maximaler Geschwindigkeit gebaut werden.

Würde die Homogenisierung nicht lokal, spezifisch für das aktuell gerade zu belichtende Belichtungsgebiet, sondern global für das gesamte Belichtungsfeld wie im Stand der Technik durchgeführt, gäbe es einen maximalen Unterschied zwischen dem hellsten und dem dunkelsten Belichtungselement, der auszugleichen wäre. Dann müsste entsprechend mehr Licht in den inaktiven OFF-Pfad gelenkt werden, und der Anteil an "genutztem Licht" wäre reduziert, d.h. die Effizienz wäre reduziert. Dadurch würde die LED-Lichtquelle pro Belichtungszyklus stärker altern.

In einer bevorzugten Ausführungsform des Verfahrens ist vorgesehen, dass vor Ausführung der Belichtung eines Belichtungsgebietes das Bild des Belichtungsgebietes mit vorab bestimmten Transformationsmatrizen in ein vorverzerrtes Bild transformiert wird, das dann zur Ansteuerung der Belichtungseinheit verwendet wird, wobei die vorab bestimmten Transformationsmatrizen eine zu der Abbildungsverzerrung der Abbildungsoptik der Belichtungseinheit inverse Transformation darstellen, so dass die Vorverzerrung des Bildes des Belichtungsgebiet danach durch die Abbildung der Belichtungseinheit auf das Belichtungsgebiet umgekehrt und aufgehoben wird.

Eine Vorrichtung zur Durchführung eines Verfahrens nach der vorliegenden Erfindung ist versehen mit:
einer Belichtungseinheit zur Belichtung eines Belichtungsgebietes mit jeweils durch eine Steuereinheit vorgegebener Schichtkontur, wobei die Belichtungseinheit zur Belichtung einer Vielzahl von Bildelementen, die zusammen ein vorgegebenes Belichtungsfeld ergeben, eingerichtet und dazu ausgestaltet ist, eine Belichtung eines Belichtungsgebiets innerhalb des Belichtungsfelds durch selektives Belichten von Bildelementen, die zusammen das Belichtungsgebiet mit der jeweils vorgegebenen Schichtkontur definieren, unter Steuerung der Steuereinheit durchzuführen, wobei die Belichtungseinheit dazu ausgestaltet ist, für jedes Bildelement Belichtungslicht mit einstellbarer Belichtungsintensität zwischen Null und einer maximalen Intensität erzeugen zu können, das über eine Abbildungsoptik der Belichtungseinheit auf das zugehörige Bildelement abgebildet wird,
wobei die Steuereinheit dazu eingerichtet ist, Daten eines Belichtungsgebiets einer zu belichtenden Schicht zu verwenden, die Belichtungseinheit zum selektiven Aktivieren von Bildelementen, die zusammen das jeweilige Belichtungsgebiet einer auszuhärtenden Schicht definieren, anzusteuern und bei der Ansteuerung der Belichtungseinheit vorab bestimmte Homogenisierungsfaktoren zu verwenden, wobei jedem Bildelement ein vorab so bestimmter Homogenisierungsfaktor zugeordnet ist, dass, wenn bei der Erzeugung von Belichtungslicht für Bildelemente Belichtungsintensitäten verwendet werden, die für jedes Bildelement durch eine einheitliche Grundintensität multipliziert jeweils mit dem dem jeweiligen Bildelement zugeordneten Homogenisierungsfaktor bestimmt ist, die am Belichtungsort tatsächliche wirksame Intensität für jedes Bildelement ortsunabhängig über das Belichtungsfeld gleich ist,
dadurch gekennzeichnet, dass die Steuereinheit weiter dazu eingerichtet ist, vor jeder Belichtung eines Belichtungsgebietes einen Aufhellungsfaktor als Verhältnis von maximaler Intensität der Belichtungseinheit zu der in dem jeweiligen Belichtungsgebiet maximalen Belichtungsintensität zu bestimmen und die Belichtungsintensitäten multipliziert mit dem Aufhellungsfaktor zur Belichtung des jeweiligen Belichtungsgebiets zu verwenden,
wobei die Steuereinheit (1) entweder weiter dazu eingerichtet ist, eine für die Aushärtung einer Schicht in einem Belichtungsgebiet ohne Aufhellungsfaktor notwendige Belichtungszeit bei Belichtung mit Aufhellungsfaktor durch den Aufhellungsfaktor zu dividieren, so dass eine verkürzte Belichtung durchgeführt wird, (2) oder die Steuereinheit dazu eingerichtet ist, bei Aushärtung einer Schicht in einem Belichtungsgebiet die Intensität der Lichtquelle der Beleuchtungseinheit durch Division durch den Aufhellungsfaktor gegenüber einer Belichtung ohne Aufhellungsfaktor zu reduzieren, während die Belichtungsdauer im Vergleich zu einer Belichtung ohne Aufhellungsfaktor unverändert beibehalten wird.

In einer bevorzugten Ausführungsform der Vorrichtung weist die Belichtungseinheit eine Lichtquelle, einen im Strahlengang der Lichtquelle liegenden, von der Steuereinheit gesteuerten Flächenintensitätsmodulator, der ein zweidimensionales Feld von Belichtungselementen aufweist, wobei jeweils ein Belichtungselement einem Bildelement in dem Belichtungsfeld der Beleuchtungseinheit zugeordnet ist, sowie optische Elemente zwischen der Lichtquelle und dem Flächenintensitätsmodulator und eine Abbildungsoptik zwischen dem Flächenintensitätsmodulator und dem Belichtungsgebiet auf.

In einer bevorzugten Ausführungsform ist die Belichtungseinheit dazu ausgestaltet, für jedes Bildelement Belichtungslicht mit einstellbarer Belichtungsintensität zwischen Null und einer maximalen Intensität erzeugen zu können, indem die Steuereinheit und der Intensitätsmodulator so zusammenwirken, dass jedes Belichtungselement des Flächenintensitätsmodulators Licht mit Intensität 0 bei Belichtungsintensität 0 und Licht mit maximaler Intensität bei maximaler Belichtungsintensität der Belichtungseinheit in die Abbildungsoptik zur Belichtung des zugeordneten Bildelements in das Belichtungsgebiet weiterleitet.

In einer bevorzugten Ausführungsform umfasst der Flächenintensitätsmodulator eine Mikrospiegel-Vorrichtung mit einer Vielzahl von matrixförmig angeordneten Mikrospiegelaktoren oder eine Flüssigkristallanzeige mit einer Vielzahl von matrixförmig angeordneten Anzeigeelementen, wobei jeder der Mikrospiegelaktoren bzw. jedes der Anzeigeelemente jeweils einem Bildelement in dem Belichtungsfeld zugeordnet ist.

In einer bevorzugten Ausführungsform ist die Lichtquelle eine LED-Lichtquelle, deren Licht in einen Lichtmischstab gerichtet wird, der z.B. aus einer verspiegelten äußeren Glaswandstruktur aufgebaut ist, die im Querschnitt geschlossen ist, wobei durch die LED-Lichtquelle eingestrahltes Licht durch Mehrfachreflexion an den Innenflächen der verspiegelten Glaswandstruktur des Lichtmischstabes homogenisiert wird, und dass aus dem Lichtmischstab austretendes Licht über abbildungsoptische Elemente auf eine Mikrospiegel-Vorrichtung gerichtet wird, deren Mikrospiegelaktoren als Belichtungselemente Licht selektiv auf das zugeordnete Bildelement im Belichtungsfeld oder in einen inaktiven Bereich lenken, so dass im letzteren Fall das zugeordnete Bildelement kein Licht von dem zugeordneten Mikrospiegelaktuator empfängt.

In einer bevorzugten Ausführungsform wird das Licht aus dem Lichtmischstab auf ein TIR-Prisma gerichtet, das den von der LED-Lichtquelle stammenden und in dem Lichtmischstab homogenisierten Lichtstrahl auf die Mikrospiegel-Vorrichtung lenkt, wobei die Steuereinheit dazu eingerichtet ist, jeden Mikrospiegel-Aktuator getaktet zu verkippen, so dass nach Maßgabe des Tastverhältnisses jeder Mikrospiegelaktuator Licht mit einer Belichtungsintensität von 0 bis zu einer maximalen Belichtungsintensität weiterleitet.

In einer bevorzugten Ausführungsform sind zwischen dem Lichtmischstab und dem TIR-Prisma in dieser Reihenfolge eine oder mehrere Kondensorlinsen, eine Blende und eine oder mehrere Fokussierlinsen angeordnet, sodass das von der Mikrospiegel-Vorrichtung auf das Belichtungsgebiet zu richtende Licht gebündelt auf das TIR-Prisma gerichtet ist und nach Passieren des TIR-Prismas ein Projektionsobjektiv durchläuft, das die Mikrospiegel-Vorrichtung auf das Belichtungsfeld abbildet.

Die Erfindung wird im Folgenden anhand der Figuren weiter beschrieben, in denen:
Fig. 1 ein Blockdiagramm zeigt, das eine zur Durchführung eines erfindungsgemäßen Verfahrens geeignete Vorrichtung illustriert, und
Fig. 2 eine vereinfachte Darstellung von Matrizen, die einem Beleuchtungsfeld mit 4 x 3 Bildelementen zugeordnet sind und die die Homogenisierung lokal in dem tatsächlich zu belichtenden Belichtungsgebiet illustrieren.

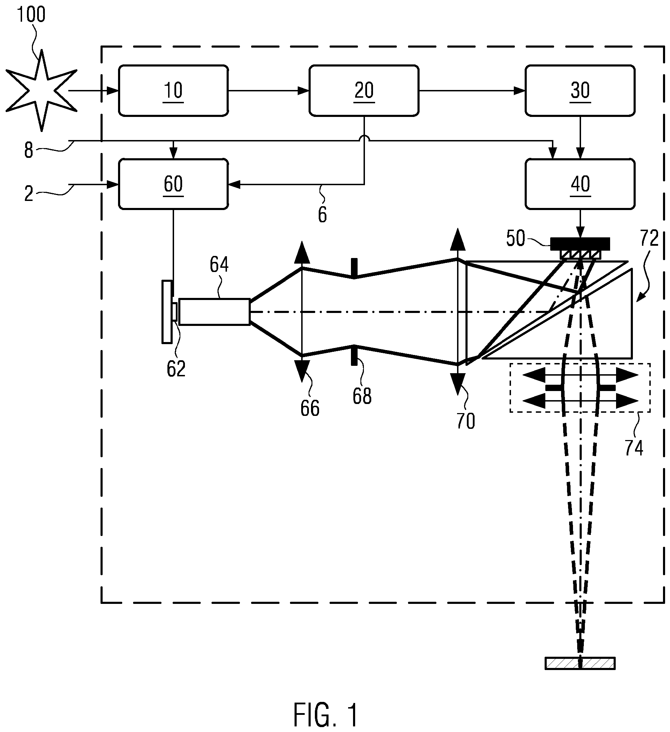

Fig. 1 zeigt schematisch einen Überblick der Belichtungseinheit, die für das erfindungsgemäße stereolithographische Bauverfahren verwendet wird, sowie der Komponenten, die zur Steuerung der Belichtungseinheit zur selektiven Belichtung einer Schicht eingesetzt werden. Die im oberen Teil von Fig. 1 als Blöcke dargestellten Komponenten, die zur Steuerung der Belichtungseinheit dienen, sind dabei nicht notwendig separate Datenverarbeitungseinheiten, sondern können auch Programmpakete sein, die zur Ausführung der im Folgenden beschriebenen Funktionen dienen.

In Fig. 1 ist die Kontur 100 einer zu belichtenden Schicht symbolisch als Stern gezeigt. Hierbei ist zu beachten, dass eine "Kontur" einer zu belichtenden Schicht im Sinne der vorliegenden Erfindung nicht notwendigerweise ein einzelnes zusammenhängendes Gebiet sein muss, sondern auch mehrere nebeneinander liegende, voneinander getrennte Schichtbereiche umfassen kann. Die Daten der zu belichtenden Schichten sind vorab gespeichert oder werden kontinuierlich zugeführt. Die Daten einer zu belichtenden Schichtkontur 100 können in jedem Bild-Dateiformat vorliegen, z.B. im PNG-Dateiformat. Die Daten der Kontur 100 der zu belichtenden Schicht werden in einem PNG-Dekoder 10 in eine Bitmap mit jeweils einem Bit (schwarz/weiß) pro Bildelement umgewandelt. Die Bitmap der Kontur 100 der zu belichtenden Schicht wird dann im Homogenisierungsmodul 20 so umgewandelt, dass bei der Belichtung im eigentlichen Belichtungsgebiet die ursprünglich "weißen" Bits auch eine tatsächlich gleiche ("weiße") Intensität haben und die ursprünglich "schwarzen" Bits auch tatsächlich dunkel sind, d.h. die minimale Restintensität durch unvermeidliche Streuung haben. Dazu ist jedem Bildelement in dem Belichtungsfeld der Belichtungseinheit ein Homogenisierungsfaktor zugeordnet, der die Intensität des zugeordneten Belichtungselements so steuert, dass dieses Belichtungselement dann eine solche Intensität liefert, die nach der Abbildung durch die abbildende Optik zu einer über das gesamte Belichtungsfeld homogenen Belichtung der Bildelemente führt.

Der Vorgang der Homogenisierung ist in Fig. 2 illustriert. Fig. 2 zeigt ein stark vereinfachtes Beispiel für eine Belichtungseinheit mit einem Belichtungsfeld von nur 4 x 3 Bildelementen (übliche Belichtungseinheiten, z.B. mit einer Mikrospiegel-Vorrichtung, haben typischerweise größenordnungsmäßig 10⁶ Bildelemente). Fig. 2 zeigt links die Bitmap als 4 x 3 Matrix, die den PNG-Dekoder 10 verlässt. Das Belichtungsgebiet innerhalb des Belichtungsfeldes umfasst ein Quadrat von vier zu belichtenden Bildelementen, die den Bitwert 1 haben.

In der Mitte von Fig. 2 ist eine 4 x 3 Matrix von Homogenisierungsfaktoren dargestellt. In der Belichtungseinheit ist jedem Bildelement des Belichtungsfeldes ein Belichtungselement zugeordnet, das Licht durch eine Abbildungsoptik auf das zugehörige Bildelement projiziert. Im Beispiel von Fig. 2 ist angenommen, dass jedes Belichtungselement mit einer einstellbaren Intensität auf einer 8 Bit-Skala betrieben werden kann, was durch Belichtungsintensitäten von 0 bis 255 wiedergegeben werden kann. Da die Abbildungsoptik die Belichtungsintensitäten nicht gleichmäßig über das gesamte Belichtungsfeld projiziert, müssen diejenigen Bildelemente, deren Licht auf dem Weg durch die Abbildungsoptik stärker abgeschwächt wird, mit umgekehrt proportional zur stärkeren Abschwächung höheren mittleren Belichtungsintensitäten versorgt werden, um eine über das gesamte Belichtungsfeld homogene Belichtungsintensität zu ermöglichen. Im Beispiel von Fig. 2 erhalten, bei gleicher Belichtungsintensität durch die Belichtungselemente, die an den Ecken liegenden Bildelemente die niedrigste tatsächliche Belichtungsintensität. Die Homogenisierungsfaktoren sind umgekehrt proportional zur tatsächlichen Belichtungsintensität eines Bildelements bei homogener Belichtungsintensität der Belichtungselemente über das Belichtungsfeld. Daher erhalten die Homogenisierungsfaktoren der den Bildelementen in den Ecken des Belichtungsfeldes zugeordneten Bildelemente die höchsten Homogenisierungsfaktoren von 255 (höchste Belichtungsintensität der zugeordneten Belichtungselemente), während die zentralen beiden Bildelemente niedrigere Homogenisierungsfaktoren von 180 haben.

Das in der linken Matrix dargestellte quadratische Belichtungsgebiet mit 2 x 2 Bildelementen wird mit der Matrix der Homogenisierungsfaktoren multipliziert, um die rechts stehende Matrix zu erhalten, die den Ausgangspunkt für die Ansteuerung der den zu belichtenden Bildelementen zugeordneten Belichtungselementen bildet. Im Stand der Technik wurden die so homogenisierten Belichtungsintensitäten zur Ansteuerung der zugeordneten Belichtungselemente verwendet. In der Mehrzahl der Fälle liegt das Belichtungsgebiet jedoch eher im oder nahe am Zentrum des Belichtungsfeldes, wo die Homogenisierungsfaktoren kleiner sind als an den äußeren Rändern des Belichtungsfeldes. Nach der vorliegenden Erfindung werden daher die Belichtungsintensitäten innerhalb des tatsächlich zu belichtenden Belichtungsgebietes so umskaliert, dass wenigstens ein Belichtungselement, das einem Bildelement innerhalb des Belichtungsgebietes zugeordnet ist, die maximal mögliche Belichtungsintensität pro Belichtungselement erhält. Im Beispiel von Fig. 2 bedeutet das, dass die Belichtungsintensitäten der Belichtungselemente in der Matrix rechts oben mit einem Aufhellungsfaktor multipliziert werden, der definiert ist als der Quotient aus der maximal möglichen Belichtungsintensität pro Belichtungselement, nämlich 255, durch die in dem aktuellen Belichtungsgebiet vorkommende Belichtungsintensität eines Belichtungselements, in dem dargestellten Fall 200 (Aufhellungsfaktor = 255/200). Die resultierende Matrix von Belichtungsintensitäten, mit denen die Belichtungselemente zur Ansteuerung des quadratischen Belichtungsgebiets aus 2 x 2 Bildelementen angesteuert werden, ist in Fig. 2 in der Matrix rechts unten aufgeführt.

Nach der so vorgenommenen Homogenisierung in dem Homogenisierungsmodul wird die resultierende Bitmap als 8-Bit Graustufen-Bitmap einem Entzerrungsmodul 30 zugeführt. Darin wird das homogenisierte Einzelbild aus dem Homogenisierungsmodul 20 z.B. mittels X- und Y-Transformationsmatrizen in ein vorverzerrtes Koordinatensystem überführt, das vorab so bestimmt ist, um die Verzerrung durch die Abbildungsoptik der Belichtungseinheit zu kompensieren. Beispielhafte Entzerrungsverfahren sind in EP 1 048 441 B1 und US 2001/0048184 A1 (insbesondere in der zu Fig. 8 gehörigen Beschreibung) beschrieben.

Die Graustufen-Bitmap aus dem Entzerrungsmodul 30 wird dann einer DLP-Steuereinheit zugeführt, die einen Flächenintensitätsmodulator 50 ansteuert, zum Beispiel eine Mikrospiegel-Vorrichtung.

Bei der Bestimmung der Homogenisierungsfaktoren sind die Transformationen der nachfolgenden Entzerrung berücksichtigt, so dass die kombinierte Wirkung von Homogenisierung und Entzerrung zu einer Homogenisierung der Intensitäten der Bildelemente über das Belichtungsfeld führt.

Die Belichtungseinheit umfasst eine LED-Lichtquelle 62, die von einem LED-Treiber 60 angesteuert wird. Die Intensität der LED-Lichtquelle kann durch eine übergeordnete Steuereinheit vorgegeben werden, was durch den von außen zum LED-Treiber 60 führenden Leitung 2 angedeutet ist. Es besteht ferner eine Verbindung von dem Homogenisierungsmodul 20 über die Leitung 6 zum LED-Treiber 60. Dadurch kann (1) entweder nach Maßgabe des aktuellen Aufhellungsfaktors die Intensität der LED-Lichtquelle reduziert werden (durch Division durch den Aufhellungsfaktor), denn durch die Multiplikation der Belichtungsintensitäten mit dem Aufhellungsfaktor ( ≥ 1) kann bei gleichbleibender Belichtungszeit mit geringerer Intensität der LED-Lichtquelle die gewünschte Energiedosis für jedes Bildelement erreicht werden; durch die Reduzierung der Intensität der LED-Lichtquelle erhöht sich deren Lebensdauer, (2) oder es kann, was in Fig. 2 nicht dargestellt ist, auch eine Kommunikationsverbindung zwischen dem Homogenisierungsmodul 20 und der DLP-Steuereinheit 40 (DLP: Digital Light Processor) bestehen, um die Belichtungsdauer nach Maßgabe des Aufhellungsfaktors zu reduzieren, um so die über die Belichtungsdauer integrierten Belichtungsintensitäten konstant zu halten.

Die Leitung 8 dient zur Übertragung der Belichtungsdauer zur DLP-Steuereinheit 40.

Das von der LED-Lichtquelle 62 abgestrahlte Licht durchläuft zunächst einen hohlen Lichtmischstab 64. Dieser Lichtmischstab 64 hat eine geschlossene Mantelfläche, die durch eine verspiegelte Glaswandstruktur gebildet ist, deren Querschnittsfläche z.B. rechteckig ist und an das Seitenverhältnis des Belichtungsfeldes angepasst ist. Die Glaswandstruktur kann z.B. durch mehrere verspiegelte Glasplatten gebildet sein.

Der Lichtmischstab 64 fängt einen Großteil des von der LED-Lichtquelle 62 emittierten Lichts auf und homogenisiert das Licht durch Mehrfachreflexionen an den verspiegelten Flächen entlang des Lichtmischstabs 64.

Auf den Lichtmischstab 64 folgen eine Kondensorlinse 66, eine Blende 68 und eine Fokussierlinse 70. Darauf folgend fällt das Licht auf ein TIR-Prisma 72 (TIR: total internal reflection). Das TIR-Prisma 72 umfasst zwei Prismateile, welche durch einen engen Luftspalt voneinander getrennt sind. Das TIR-Prisma 72 lenkt den Beleuchtungsstrahl, der zuletzt die Fokussierlinse 70 durchlaufen hat, auf den Flächenintensitätsmodulator 50, indem die innere Totalreflexion an der dem schmalen Luftspalt zugewandten Prismaseite ausgenutzt wird. Innere Totalreflexion findet für alle flachen Winkel zu der dem Luftspalt zugewandten Prismenseite bis hin zu einem kritischen Winkel statt. Das von dem Flächenintensitätsmodulator 50, z.B. einer Mikrospiegel-Vorrichtung, reflektierte Licht passiert die dem Luftspalt zugewandten Prismenseiten, weil der Einfallswinkel des reflektierten Licht über dem kritischen Winkel liegt.

Nach dem TIR-Prisma 72 und dem Flächenintensitätsmodulator 50 durchläuft der Belichtungsstrahl das abbildende Objektiv 74, das die aktive Oberfläche des Flächenintensitätsmodulators 50 auf das Belichtungsfeld der Belichtungseinheit abbildet.

## Patentansprüche

1. Verfahren zum schichtweisen Aufbau eines Formkörpers durch stereolithographisches Aushärten von photopolymerisierbarem Material in aufeinanderfolgenden Schichten durch Belichten mittels einer Belichtungseinheit in einem für jede Schicht vorgegebenen Belichtungsgebiet mit vorgegebener Schichtkontur, wobei die Belichtungseinheit zur Belichtung einer Vielzahl von Bildelementen in einem vorgegebenen Belichtungsfeld ausgestaltet ist und eine Belichtung durch von einer Steuereinheit (10, 20, 30, 40) gesteuertes selektives Belichten von Bildelementen, die zusammen das Belichtungsgebiet mit der jeweils vorgegebenen Schichtkontur definieren, erfolgt und wobei die Belichtungseinheit durch die Steuereinheit dazu ansteuerbar ist, für jedes Bildelement Belichtungslicht mit einstellbarer Belichtungsintensität zwischen Null und einer maximalen Intensität zu erzeugen, das über eine Abbildungsoptik (74) der Belichtungseinheit auf das zugehörige Bildelement abgebildet wird, wobei die Steuereinheit (10, 20, 30, 40) bei der Ansteuerung der Belichtungseinheit vorab bestimmte Homogenisierungsfaktoren verwendet, wobei jedem Bildelement ein vorab so bestimmter Homogenisierungsfaktor zugeordnet ist, dass, wenn bei der Erzeugung von Belichtungslicht für Bildelemente Belichtungsintensitäten verwenden werden, die für jedes Bildelement durch eine einheitliche Grundintensität multipliziert jeweils mit dem dem jeweiligen Bildelement zugeordneten Homogenisierungsfaktor bestimmt ist, die tatsächliche wirksame Intensität für jedes Bildelement ortsunabhängig über das Belichtungsfeld gleich ist, **dadurch gekennzeichnet, dass** von der Steuereinheit (10, 20, 30, 40) vor Belichtung eines Belichtungsgebiets ein Aufhellungsfaktor als Verhältnis der maximaler Intensität der Belichtungseinheit zu der in dem jeweiligen Belichtungsgebiet maximalen Belichtungsintensität bestimmt und die Belichtungsintensitäten multipliziert mit dem Aufhellungsfaktor zur Ansteuerung der Belichtungseinheit zur Belichtung des jeweiligen Belichtungsgebiets verwendet werden,
wobei entweder
die zur Aushärtung einer Schicht in dem Belichtungsgebiet ohne Aufhellungsfaktor notwendige Belichtungsdauer durch den Aufhellungsfaktor dividiert und eine demgemäß verkürzte Belichtung des Belichtungsgebiets durchgeführt wird,
oder
die zur Aushärtung einer Schicht in einem Belichtungsgebiet ohne Aufhellungsfaktor notwendige Intensität einer Lichtquelle der Belichtungseinheit durch Division durch den Aufhellungsfaktor reduziert wird, um die Belichtung des Belichtungsgebiets mit reduzierter Intensität der Lichtquelle vorzunehmen.

2. Verfahren nach Anspruch 1, **dadurch gekennzeichnet, dass** vor Ausführung der Belichtung eines Belichtungsgebietes das Bild des Belichtungsgebietes mit vorab bestimmten Transformationsmatrizen in ein vorverzerrtes Bild transformiert wird, das dann zur Ansteuerung der Belichtungseinheit verwendet wird, wobei die vorab bestimmten Transformationsmatrizen eine zu der Abbildungsverzerrung der Abbildungsoptik der Belichtungseinheit inverse Transformation darstellen, so dass die Vorverzerrung des Bildes des Belichtungsgebiet danach durch die Abbildung der Belichtungseinheit auf das Belichtungsgebiet umgekehrt und aufgehoben wird.

3. Vorrichtung zur Durchführung eines Verfahrens nach einem der vorhergehenden Ansprüche mit:
einer Belichtungseinheit zur Belichtung eines Belichtungsgebietes mit jeweils durch eine Steuereinheit (10, 20, 30, 40) vorgegebener Schichtkontur, wobei die Belichtungseinheit zur Belichtung einer Vielzahl von Bildelementen, die zusammen ein vorgegebenes Belichtungsfeld ergeben, eingerichtet und dazu ausgestaltet ist, eine Belichtung eines Belichtungsgebiets innerhalb des Belichtungsfelds durch selektives Belichten von Bildelementen, die zusammen das Belichtungsgebiet mit der jeweils vorgegebenen Schichtkontur definieren, unter Steuerung der Steuereinheit (10, 20, 30, 40) durchzuführen, wobei die Belichtungseinheit dazu ausgestaltet ist, für jedes Bildelement Belichtungslicht mit einstellbarer Belichtungsintensität zwischen Null und einer maximalen Intensität erzeugen zu können, das über eine Abbildungsoptik (74) der Belichtungseinheit auf das zugehörige Bildelement abgebildet wird, und
wobei die Steuereinheit (10, 20, 30, 40) dazu eingerichtet ist, Daten eines Belichtungsgebiets einer zu belichtenden Schicht zu verwenden, die Belichtungseinheit zum selektiven Aktivieren von Bildelementen, die zusammen das jeweilige Belichtungsgebiet einer auzuhärtenden Schicht definieren, anzusteuern und bei der Ansteuerung der Belichtungseinheit vorab bestimmte Homogenisierungsfaktoren zu verwenden, wobei jedem Bildelement ein vorab so bestimmter Homogenisierungsfaktor zugeordnet ist, dass, wenn bei der Erzeugung von Belichtungslicht für Bildelemente Belichtungsintensitäten verwendet werden, die für jedes Bildelement durch eine einheitliche Grundintensität multipliziert jeweils mit dem dem jeweiligen Bildelement zugeordneten Homogenisierungsfaktor bestimmt ist, die am Belichtungsort tatsächliche wirksame Intensität für jedes Bildelement ortsunabhängig über das Belichtungsfeld gleich ist,
**dadurch gekennzeichnet, dass** die Steuereinheit (10, 20, 30, 40) weiter dazu eingerichtet ist, vor jeder Belichtung eines Belichtungsgebietes einen Aufhellungsfaktor als Verhältnis von maximaler Intensität der Belichtungseinheit zu der in dem jeweiligen Belichtungsgebiet maximalen Belichtungsintensität zu bestimmen und die Belichtungsintensitäten multipliziert mit dem Aufhellungsfaktor zur Belichtung des jeweiligen Belichtungsgebiets zu verwenden,
wobei entweder
die Steuereinheit dazu eingerichtet ist, eine für die Aushärtung einer Schicht in einem Belichtungsgebiet ohne Aufhellungsfaktor notwendige Belichtungszeit bei Belichtung mit Aufhellungsfaktor durch den Aufhellungsfaktor zu dividieren, so dass eine verkürzte Belichtung durchgeführt wird,
oder
die Steuereinheit dazu eingerichtet ist, bei Aushärtung einer Schicht in einem Belichtungsgebiet die Intensität der Lichtquelle der Beleuchtungseinheit durch Division durch den Aufhellungsfaktor gegenüber einer Belichtung ohne Aufhellungsfaktor zu reduzieren, während die Belichtungsdauer im Vergleich zu einer Belichtung ohne Aufhellungsfaktor unverändert beibehalten wird.

4. Vorrichtung nach Anspruch 3, **dadurch gekennzeichnet, dass** die Belichtungseinheit eine Lichtquelle (62), einen im Strahlengang der Lichtquelle liegenden, von der Steuereinheit gesteuerten Flächenintensitätsmodulator (50), der eine zweidimensionales Feld von Belichtungselementen aufweist, wobei jeweils ein Belichtungselement einem Bildelement in dem Belichtungsfeld der Beleuchtungseinheit zugeordnet ist, und optische Elemente (64, 66, 68, 70, 72) zwischen der Lichtquelle (62) und dem Flächenintensitätsmodulator und eine Abbildungsoptik (74) zwischen dem Flächenintensitätsmodulator und dem Belichtungsgebiet aufweist, die den Flächenintensitätsmodulator (50) auf das Belichtungsfeld abbildet.

5. Vorrichtung nach Anspruch 4, **dadurch gekennzeichnet, dass** die Belichtungseinheit dazu ausgestaltet ist, für jedes Bildelement Belichtungslicht mit einstellbarer Belichtungsintensität zwischen Null und einer maximalen Intensität erzeugen zu können, indem die Steuereinheit (10, 20, 30, 40) und der Intensitätsmodulator (50) so zusammenwirken, dass jedes Belichtungselement des Flächenintensitätsmodulators Licht mit Intensität 0 bei Belichtungsintensität 0 und Licht mit maximaler Intensität bei maximaler Belichtungsintensität der Belichtungseinheit in die Abbildungsoptik zur Belichtung des zugeordneten Bildelements im Belichtungsgebiet weiterleitet.

6. Vorrichtung nach einem der Ansprüche 4 bis 5, **dadurch gekennzeichnet, dass** der Flächenintensitätsmodulator (50) eine Mikrospiegel-Vorrichtung mit einer Vielzahl von matrixförmig angeordneten Mikrospiegelaktoren oder eine Flüssigkristallanzeige mit einer Vielzahl von matrixförmig angeordneten Anzeigeelementen umfasst, wobei jeder der Mikrospiegelaktoren bzw. jedes der Anzeigeelemente jeweils einem Bildelement in dem Belichtungsfeld zugeordnet ist.

7. Vorrichtung nach einem der Ansprüche 4 bis 6, **dadurch gekennzeichnet, dass** die Lichtquelle (62) eine LED-Lichtquelle ist, dass das Licht der LED-Lichtquelle in einen Lichtmischstab (64) gerichtet wird, der aus einer verspiegelten äußeren Glaswandstruktur aufgebaut ist, die im Querschnitt geschlossen ist und einen Lichttunnel bildet, wobei durch die LED-Lichtquelle (62) eingestrahltes Licht durch Mehrfachreflexion an den Innenflächen der verspiegelten Glaswandstruktur des Lichtmischstabes homogenisiert wird, und dass aus dem Lichtmischstab (64) austretendes Licht über abbildungsoptische Elemente (72) auf eine Mikrospiegel-Vorrichtung gerichtet wird, dessen Mikrospiegelaktoren als Belichtungselemente Licht selektiv auf das zugeordnete Bildelement im Belichtungsfeld oder in einen inaktiven Bereich lenken, so dass im letzteren Fall das zugeordnete Bildelement kein Licht von dem zugeordneten Mikrospiegelaktuator empfängt.

8. Vorrichtung nach Anspruch 7, **dadurch gekennzeichnet, dass** das Licht aus dem Lichtmischstab (64) auf ein TIR-Prisma (72) gerichtet wird, das den von der LED-Lichtquelle (62) stammenden und in dem Lichtmischstab homogenisierten Lichtstrahl auf die Mikrospiegel-Vorrichtung lenkt, wobei die Steuereinheit dazu eingerichtet ist, jeden Mikrospiegel-Aktuator getaktet zu verkippen, so dass nach Maßgabe des Tastverhältnisses jeder Mikrospiegelaktuator Licht mit einer Belichtungsintensität von 0 bis zu einer maximalen Belichtungsintensität weiterleitet.

9. Vorrichtung nach Anspruch 8, **dadurch gekennzeichnet, dass** zwischen dem Lichtmischstab (64) und dem TIR-Prisma (72) in dieser Reihenfolge eine oder mehrere Kondensorlinsen (66), eine Blende (68) und eine oder mehrere Fokussierlinsen (70) angeordnet sind und dass von der Mikrospiegel-Vorrichtung auf das Belichtungsgebiet zu richtendes Licht auf das TIR-Prisma (72) gerichtet und nach Passieren des TIR-Prismas ein Projektionsobjektiv (74) durchläuft, das die Mikrospiegel-Vorrichtung auf das Belichtungsfeld abbildet.

## Claims

1. Method for layer-wise construction of a shaped body by stereolithographic solidification of photopolymerizable material in successive layers utilizing an exposure unit for exposure within an exposure area having a layer contour that is predefined for each layer, wherein the exposure unit is configured for exposing a plurality of picture elements in a predetermined exposure field and to perform an exposure by selectively, controlled by a control unit (10, 20, 30, 40) exposing picture elements which collectively define the exposure area having the predefined layer contour for each respective layer, and wherein the exposure unit is configured to be controllable by the control unit to generate exposure light for each picture element with adjustable exposure intensity between zero and a maximal intensity, which exposure light is projected by imaging optics (74) to an associated picture element, wherein the control unit (10, 20, 30, 40) uses, when controlling the exposure unit, homogenizing factors which have been determined in advance, wherein each picture element is associated with a homogenizing factor which has been determined in advance such that, when for the generation of exposure light exposure intensities are used which for each picture element are determined by a uniform basic intensity multiplied with the homogenizing factor that is associated with each respective picture element, the intensity that actually is effected for each picture element is the same for each picture element independent of the position in the exposure field, **characterized in that** before exposing an exposure area the control unit (10, 20, 30, 40) determines a brightening factor as the ratio between the maximal intensity of the exposure unit and the maximal exposure intensity present in the current exposure area, and uses for controlling the exposure unit the exposure intensities multiplied with the brightening factor for exposing the respective exposure area,
wherein either
the exposure time that would be required for solidification of a layer in the exposure area for an exposure without use of the brightening factor is divided by the brightening factor, and that a shortened exposure of the exposure area using the divided exposure time is performed,
or
an intensity of a light source of the exposure unit that would be required for solidification of a layer in a exposure area without use of the brightening factor is reduced by dividing it through the brightening factor in order perform the exposure of the exposure area with the reduced intensity of the light source.

2. Method according to any preceding claims, **characterized in that** before performing the exposure of an exposure area an image of the exposure area is transformed, using predetermined transformation matrices, to a pre-distorted image which is utilized for controlling the exposure unit, wherein the predetermined transformation matrices perform a transformation that is inverse to the imaging distortion of the imaging optics of the exposure unit such that the pre-distortion of the image of the exposure area is reversed by the imaging of the exposure unit onto the exposure area and is thereby cancelled.

3. Device for carrying out a method according to any of the preceding claims, comprising
an exposure unit for exposing an exposure area having a contour defined by a control unit (10, 20,30, 40), wherein the exposure unit is configured for exposing a plurality of picture elements, which collectively cover a predetermined exposure field, and is arranged to perform an exposure, under the control of the control unit, of an exposure area within the exposure field by selectively exposing picture elements which together define the exposure area with the respectively defined layer contour, wherein the exposure unit is capable of generating for each picture element exposure light with an adjustable exposure intensity between zero and a maximal intensity, which exposure light is projected by projection optics (74) of the exposure unit to the respective picture element, and
wherein the control unit (10, 20, 30, 40) is arranged to use data defining an exposure area of a layer to be exposed to control the exposure unit for selectively activating picture elements, which picture elements together define the respective exposure area of a layer to be solidified, and to control the exposure unit by utilizing predetermined homogenizing factors, wherein each picture element is associated with a homogenizing factor which has been predetermined in such a manner that, when for the generation of exposure light an exposure intensity is used which for each picture element is determined by a uniform basic intensity multiplied by the homogenizing factor associated with the respective picture element, the actually effective intensity at a site of exposure is equal for each picture element independent of the position within the exposure field,
**characterized in that** the control unit (10, 20, 30, 40) is further arranged to determine, before each exposure of an exposure area, a brightening factor defined as the ratio between the maximal intensity of the exposure unit to the maximal exposure intensity in the respective exposure area, and to use the exposure intensities multiplied by the brightening factor for exposure of the respective exposure area,
wherein either
the control unit is arranged to divide an exposure time, that would be required for solidification of a layer in an exposure area without use of the brightening factor, by the brightening factor such that a shortened exposure is performed,
or
the control unit is arranged to, when solidifying a layer in an exposure area, to reduce the intensity of the light source of the exposure unit by dividing the intensity required for an exposure without use of the brightening factor by the brightening factor, while the exposure time is, compared to an exposure without use of the brightening factor, kept unchanged.

4. Device according to claim 3, **characterized in that** the exposure unit comprises a light source (62), a spatial light modulator (50) which is located in a beam path of the light source and which is controlled by the control unit, which spatial light modulator includes a two-dimensional array of exposure elements, wherein to each exposure element a picture element in the exposure field of the exposure unit is assigned, optical elements (64, 66, 68, 70, 72) between the light source (62) and the spatial light modulator and projection optics (74) between the spatial light modulator and the exposure area, which projection optics project an image of the spatial light modulator (50) onto the exposure field.

5. Device according to claim 4, **characterized in that** the exposure unit is configured to be capable of generating, for each picture element, exposure light with adjustable exposure intensity between zero and a maximal intensity by arranging the control unit (10, 20, 30, 40) and the spatial light modulator (50) to cooperate such that the exposure element of the spatial light modulator associated with the respective picture element directs light with intensity zero for exposure intensity zero, and light with maximal intensity at maximal exposure intensity of the exposure unit to the projection optics for exposing the respective picture element in the exposure area.

6. Device according to any of the claims 4 to 5, **characterized in that** the spatial light modulator (50) is a micromirror device having a plurality of micromirror actuators arranged in an array, or is a liquid crystal display having a plurality of display elements arranged in an array, wherein each micromirror actuator or each display element, respectively, is associated with a picture element in the exposure field.

7. Device according to any of the claims 4 to 6, **characterized in that** the light source (62) is a LED light source, that the light of the LED light source is directed to a light mixing bar (64) which is made up of a mirrored outer glass wall structure which is closed in cross-section and which forms a light tunnel, wherein light emitted from the LED light source (62) is homogenized by multiple reflections on the inner surfaces of the mirrored glass wall structure, and that light leaving the light mixing bar (64) is directed by projection optical elements (72) onto a micromirror device, the micromirror actuators of which micromirror device direct light as exposure elements selectively to the associated picture element in the exposure field or to an inactive area, such that in the latter case the picture element associated with the micromirror actuator does not receive light from the associated micromirror actuator.

8. Device according to claim 7, **characterized in that** light emitted by the light mixing bar (64) is directed onto a TIR prism (72) which directs the light beam originating from the LED light source (62) and homogenized in the light mixing bar onto the micromirror device, wherein the control unit is arranged to periodically tilt each micromirror actuator in a clocked manner such that each micromirror actuator transfers light with an exposure intensity between zero and a maximal exposure intensity according the duty cycle.

9. Device according to claim 8, **characterized in that** between the light mixing bar (64) and the TIR prism (72) one or more condenser lenses, an aperture (68) and one or more focussing lenses (70) are located in this sequence, and that light which is to be projected to the exposure area is directed onto the TIR prism (72), and after passing the TIR prism passes through a projection lens (74) which projects the micromirrordevice onto the exposure field.

## Revendications

1. Procédé pour la constitution couche par couche d'un corps moulé par durcissement stéréolithographique de matière photopolymérisable en couches successives par exposition au moyen d'une unité d'exposition dans une zone d'exposition prédéfinie pour chaque couche avec un contour de couche prédéfini, dans lequel l'unité d'exposition est conçue pour exposer une pluralité d'éléments d'image dans un champ d'exposition prédéfini et effectue une exposition par exposition sélective, commandée par une unité de commande (10, 20, 30, 40), d'éléments d'image, qui définissent conjointement la zone d'exposition avec le contour de couche respectivement prédéfini, et dans lequel l'unité d'exposition peut être commandée par l'unité de commande pour générer pour chaque élément d'image une lumière d'exposition à intensité d'exposition réglable entre zéro et une intensité maximale, qui est reproduite sur l'élément d'image associé par l'intermédiaire d'une optique de reproduction (74) de l'unité d'exposition, dans lequel l'unité de commande (10, 20, 30, 40), lors de la commande de l'unité d'exposition, utilise des facteurs d'homogénéisation définis à l'avance, dans lequel un facteur d'homogénéisation ainsi défini à l'avance est associé à chaque élément d'image, de sorte que, lorsque des intensités d'exposition sont utilisées lors de la génération de la lumière d'exposition pour des éléments d'image, qui est définie pour chaque élément d'image par une intensité de base uniforme multipliée respectivement par le facteur d'homogénéisation associé à l'élément d'image respectif, l'intensité efficace réelle est identique pour chaque élément d'image sur le champ d'exposition indépendamment du lieu, **caractérisé en ce qu'**un facteur d'éclaircissement est déterminé, en tant que rapport de l'intensité maximale de l'unité d'exposition à l'intensité d'exposition maximale dans la zone d'exposition respective, par l'unité de commande (10, 20, 30, 40) avant exposition d'une zone d'exposition, et les intensités d'exposition multipliées par le facteur d'éclaircissement sont utilisées pour la commande de l'unité d'exposition pour l'exposition de la zone d'exposition respective,
dans lequel soit
la durée d'exposition nécessaire au durcissement d'une couche dans la zone d'exposition sans facteur d'éclaircissement est divisée par le facteur d'éclaircissement et une exposition en conséquence raccourcie de la zone d'exposition est mise en œuvre,
soit
l'intensité d'une source de lumière de l'unité d'exposition nécessaire au durcissement d'une couche dans une zone d'exposition sans facteur d'éclaircissement est réduite par division par le facteur d'éclaircissement, afin d'effectuer l'exposition de la zone d'exposition avec une intensité réduite de la source de lumière.

2. Procédé selon la revendication 1, **caractérisé en ce que**, avant l'exécution de l'exposition d'une zone d'exposition, l'image de la zone d'exposition est transformée avec des matrices de transformation définies à l'avance en une image pré-déformée, qui est ensuite utilisée pour la commande de l'unité d'exposition, dans lequel les matrices de transformation définies à l'avance représentent une transformation inverse par rapport à la déformation de reproduction de l'optique de reproduction de l'unité d'exposition, de sorte que la pré-déformation de l'image de l'unité d'exposition est ensuite inversée par la reproduction de l'unité d'exposition sur la zone d'exposition et supprimée.

3. Dispositif pour la mise en œuvre d'un procédé selon l'une quelconque des revendications précédentes avec :
une unité d'exposition pour l'exposition d'une zone d'exposition avec respectivement un contour de couche prédéfini par une unité de commande (10, 20, 30, 40), dans lequel l'unité d'exposition, pour l'exposition d'une pluralité d'éléments d'image, qui produisent conjointement un champ d'exposition prédéfini, est configurée et conçue pour mettre en œuvre une exposition d'une zone d'exposition à l'intérieur du champ d'exposition par exposition sélective d'éléments d'image, qui définissent conjointement la zone d'exposition avec le contour de couche respectivement prédéfini, sous l'effet de la commande de l'unité de commande (10, 20, 30, 40), dans lequel l'unité d'exposition est conçue pour pouvoir produire pour chaque élément d'image une lumière d'exposition à intensité d'exposition réglable entre zéro et une intensité maximale, qui est reproduite sur l'élément d'image associé par l'intermédiaire d'une optique de reproduction (74) de l'unité d'exposition, et
dans lequel l'unité de commande (10, 20, 30, 40) est configurée pour utiliser des données d'une zone d'exposition d'une couche à exposer, commander l'unité d'exposition pour l'activation sélective d'éléments d'image, qui définissent conjointement la zone d'exposition respective d'une couche à faire durcir, et, lors de la commande de l'unité d'exposition, utiliser des facteurs d'homogénéisation définis à l'avance, dans lequel un facteur d'homogénéisation ainsi défini à l'avance est associé à chaque élément d'image de sorte que, lorsque, lors de la production d'une lumière d'exposition pour des éléments d'image, des intensités d'exposition sont utilisées, qui est définie pour chaque élément d'image par une intensité de base homogène multipliée respectivement par le facteur d'homogénéisation associé à l'élément d'image respectif, l'intensité efficace réelle est identique pour chaque élément d'image indépendamment du lieu sur la zone d'exposition,
**caractérisé en ce que** l'unité de commande (10, 20, 30, 40) est configurée en outre pour déterminer, avant chaque exposition d'une zone d'exposition, un facteur d'éclaircissement en tant que rapport de l'intensité maximale de l'unité d'exposition à l'intensité d'exposition maximale dans la zone d'exposition respective et utiliser les intensités d'exposition multipliées par le facteur d'éclaircissement pour l'exposition de la zone d'exposition respective,
dans lequel soit
l'unité de commande est configurée pour diviser une durée d'exposition, nécessaire au durcissement d'une couche dans une zone d'exposition sans facteur d'éclaircissement, lors de l'exposition avec le facteur d'éclaircissement, par le facteur d'éclaircissement, de sorte qu'une exposition raccourcie est mise en œuvre,
soit
l'unité de commande est configurée, lors du durcissement d'une couche dans une zone d'exposition, pour réduire l'intensité de la source de lumière de l'unité d'exposition par division par le facteur d'éclaircissement par rapport à une exposition sans facteur d'éclaircissement, pendant que la durée d'exposition est maintenue inchangée en comparaison d'une exposition sans facteur d'éclaircissement.

4. Dispositif selon la revendication 3, **caractérisé en ce que** l'unité d'exposition présente une source de lumière (62), un modulateur d'intensité de surface (50) situé dans le trajet de faisceau de la source de lumière, commandé par l'unité de commande, qui présente un champ bidimensionnel d'éléments d'exposition, dans lequel respectivement un élément d'exposition est associé à un élément d'image dans le champ d'exposition de l'unité d'exposition, et présente des éléments optiques (64, 66, 68, 70, 72) entre la source de lumière (62) et le modulateur d'intensité de surface et une optique de reproduction (74) entre le modulateur d'intensité de surface et la zone d'exposition, qui reproduit le modulateur d'intensité de surface (50) sur le champ d'exposition.

5. Dispositif selon la revendication 4, **caractérisé en ce que** l'unité d'exposition est conçue pour pouvoir produire pour chaque élément d'image une lumière d'exposition à intensité d'exposition réglable entre zéro et une intensité maximale, du fait que l'unité de commande (10, 20, 30, 40) et le modulateur d'intensité de surface (50) coopèrent de sorte que chaque élément d'image du modulateur d'intensité de surface transmet une lumière avec une intensité 0 pour une intensité d'exposition 0 et une lumière avec une intensité maximale pour une intensité d'exposition maximale de l'unité d'exposition dans l'optique de reproduction pour l'exposition de l'élément d'image associé dans la zone d'exposition.

6. Dispositif selon l'une quelconque des revendications 4 à 5, **caractérisé en ce que** le modulateur d'intensité de surface (50) comprend un dispositif à micro-miroirs avec une pluralité d'actionneurs de micro-miroirs disposés en forme de matrice ou un écran à cristaux liquides avec une pluralité d'éléments d'écran disposés en forme de matrice, dans lequel chacun des actionneurs de micro-miroirs ou chacun des éléments d'écran est associé à respectivement un élément d'image dans la zone d'exposition.

7. Dispositif selon l'une quelconque des revendications 4 à 6, **caractérisé en ce que** la source de lumière (62) est une source de lumière à DEL, que la lumière de la source de lumière à DEL est dirigée dans une barre de mélange de lumière (64), qui est composée d'une structure de paroi extérieure en verre argenté, qui est fermée en section transversale et forme un tunnel de lumière, dans lequel la lumière projetée par la source de lumière à DEL (62) est homogénéisée par réflexion multiple sur les surfaces intérieures de la structure de paroi en verre argenté de la barre de mélange de lumière, et que la lumière sortant de la barre de mélange de lumière (64) est dirigée par l'intermédiaire d'éléments d'optique de reproduction (72) sur un dispositif à micro-miroirs, dont les micro-actionneurs, en tant qu'éléments d'exposition, dirigent la lumière de manière sélective sur l'élément d'image associé dans le champ d'exposition ou dans une région inactive, de sorte que, dans le dernier cas, l'élément d'image associé ne reçoit pas de lumière de l'actionneur de micro-miroirs associé.

8. Dispositif selon la revendication 7, **caractérisé en ce que** la lumière provenant de la barre de mélange de lumière (64) est orientée sur un prisme TIR (72), qui dirige le faisceau lumineux provenant de la source de lumière à DEL (62) et homogénéisé dans la barre de mélange de lumière sur le dispositif à micro-miroirs, dans lequel l'unité de commande est configurée pour incliner chaque actionneur de micro-miroirs de manière cadencée, de sorte que, en fonction du rapport cyclique, chaque actionneur de micro-miroirs transmet la lumière avec une intensité d'exposition de 0 à une intensité d'exposition maximale.

9. Dispositif selon la revendication 8, **caractérisé en ce qu'**une ou plusieurs lentilles condenseurs (66), un diaphragme (68) et une ou plusieurs lentilles de focalisation (70) sont disposés dans cet ordre entre la barre de mélange de lumière (64) et le prisme TIR (72) et que la lumière à orienter du dispositif à micro-miroirs sur la zone d'exposition est orientée sur le prisme TIR (72), et, après être passée par le prisme TIR, traverse un objectif de projection (74), qui reproduit le dispositif à micro-miroirs sur le champ d'exposition.
